(19) **Europäisches Patentamt**

**European Patent Office**

**Office européen des brevets**

(11) **EP 0 699 901 A1**

(12) **EUROPÄISCHE PATENTANMELDUNG**

(43) Veröffentlichungstag:
06.03.1996 Patentblatt 1996/10

(51) Int. Cl.$^6$: **G01N 29/02**

(21) Anmeldenummer: 95113310.7

(22) Anmeldetag: 23.08.1995

(84) Benannte Vertragsstaaten:
FR GB IT

(30) Priorität: 05.09.1994 DE 4431617

(71) Anmelder: SIEMENS AKTIENGESELLSCHAFT
D-80333 München (DE)

(72) Erfinder:
- **Feucht, Hans-Dieter, Dr.**
  **D-71272 Renningen (DE)**
- **Keller, Harald, Dr.**
  **D-67069 Ludwigshafen (DE)**
- **Falk, Gertrud Elisabeth, Dr.**
  **D-91056 Erlangen (DE)**

(54) **Chemosensor**

(57)     Ein Chemosensor mit einem Transducersystem und einem Erkennungssystem weist folgende Merkmale auf:

- das Transducersystem ist ein massensensitives Bauelement, wobei die Transduceroberfläche Edelmetallelektroden aufaufweist;
- die Edelmetallelektroden sind mit einer monomolekularen oder wenige Moleküllagen dicken Self-Assembly-Schicht versehen, die über Schwefelbrücken kovalent an das Edelmetall gebunden ist und funktionelle Gruppen besitzt;
- an die funktionellen Gruppen ist ein Erkennungssystem in Form einer Oligomer- oder Polymermatrix gebunden, welche Erkennungsgruppen besitzt.

**Beschreibung**

Die Erfindung betrifft einen Chemosensor mit einem Transducersystem und einem Erkennungssystem.

Es ist bekannt, daß das Schwingverhalten von Schwingquarzen und Oberflächenwellenfiltern durch eine Massebelegung der Oberfläche beeinflußt wird. Die Frequenzverschiebung ist dabei abhängig von der jeweiligen Massebelegung der Oberfläche des Schwingquarzes bzw. des Oberflächenwellenfilters (siehe dazu: "Zeitschrift für Physik", Bd. 155 (1959), Seiten 206 bis 222, bzw. "Analytical Chemistry", Vol. 51 (1979), Seiten 1458 bis 1464, und "Sensors and Actuators", Vol. 5 (1984), Seiten 307 bis 325).

Der genannte Effekt kann zur Charakterisierung der Beschichtung selbst dienen oder - für den Fall eines reversiblen Andockens von Analytmolekülen - für analytische Zwecke genutzt werden. Anwendungen dieser Art sind beispielsweise die Detektion von $Na^+$-, $K^+$-, $Cs^+$- und $Ca^{2+}$-Ionen in wäßriger Lösung mittels eines mit einer monomolekularen n-Mercaptohexadecansäure-Schicht versehenen Schwingquarzes ("The Journal of Physical Chemistry", Vol. 96 (1992), Seiten 5224 bis 5228) und die Verwendung eines mit n-Mercaptodecansäure beschichteten Oberflächenwellenfilters als Sensor für $Cu^{2+}$-Ionen ("Analytical Chemistry", Vol. 64 (1992), Seiten 3191 bis 3193).

Bei beiden der genannten Sensoranordnungen ist die Grundvoraussetzung für den Aufbau langzeitstabiler Chemosensoren erfüllt, nämlich die kovalente Anbindung der Erkennungsschicht an die Transduceroberfläche, die in diesen Fällen über Gold-Schwefel-Bindungen erfolgt. Schwingquarze bzw. Oberflächenwellenfilter, die für sensorische Anwendungen eingesetzt werden, sollten chemisch resistente Elektrodensysteme besitzen, beispielsweise Elektroden aus Gold; auch dies ist aus dem genannten Stand der Technik bekannt.

Die Funktionalisierung von Goldoberflächen, d.h. die Anbindung von physikalisch oder chemisch funktionellen Gruppen, ist allgemein mit ω-funktionellen Thiolen bzw. ω-funktionellen Disulfiden möglich (siehe dazu: "Journal of the American Chemical Society", Vol. 109 (1987), Seiten 2358 bis 2368; "Angewandte Chemie", Bd. 101 (1989), Seiten 522 bis 528; "Langmuir", Vol. 8 (1992), Seiten 1811 bis 1816).

Werden Schwingquarze bzw. Oberflächenwellenfilter in der genannten Weise ausgestaltet, dann entstehen zweidimensionale Funktionsflächen. Diese Funktionsflächen können nun entweder direkt für sensorische Anwendungen genutzt werden oder zur Ankopplung einer weiteren Schicht, die beispielsweise spezielle Erkennungsmoleküle trägt (siehe dazu: "Journal of Electroanalytical Chemistry", Vol. 291 (1990), Seiten 171 bis 186; "Journal of the American Chemical Society", Vol. 114 (1992), Seiten 10965 bis 10966; DE-OS 41 27 821). In jedem Fall liegen aber zweidimensionale Sensorsysteme vor, bei denen die Aufnahmefähigkeit und somit auch der Meßbereich begrenzt ist.

Aufgabe der Erfindung ist es, einen Chemosensor - mit einem Transducer- und einem Erkennungssystem - derart auszugestalten, daß er sowohl die erforderliche Langzeitstabilität und Selektivität aufweist als auch eine gezielte Einstellung der Empfindlichkeit erlaubt.

Dies wird erfindungsgemäß dadurch erreicht, daß das Transducersystem ein massensensitives Bauelement ist, wobei die Transduceroberfläche Edelmetallelektroden aufweist, daß die Edelmetallelektroden mit einer monomolekularen oder wenige Moleküllagen dicken Self-Assembly-Schicht versehen sind, die über Schwefelbrücken kovalent an das Edelmetall gebunden ist und funktionelle Gruppen besitzt, und daß an die funktionellen Gruppen ein Erkennungssystem in Form einer Oligomer- oder Polymermatrix gebunden ist, welche Erkennungsgruppen besitzt.

Der Chemosensor nach der Erfindung weist einen erweiterten Meßbereich auf, und somit kann die Empfindlichkeit gezielt gesteuert werden, d.h. der Empfindlichkeitsbereich ist gezielt einstellbar. Dies ist aufgrund einer Erhöhung der Anzahl der Erkennungszentren möglich. Erreicht wird dies durch einen dreidimensionalen Aufbau des Erkennungssystems, durch den das Manko der bekannten Erkennungsschichten beseitigt wird, die - aufgrund des zweidimensionalen Aufbauprinzips - eine begrenzte Moleküldichte und somit auch eine begrenzte Funktionsdichte pro Flächeneinheit aufweisen.

Der Transducer des erfindungsgemäßen Chemosensors ist ein massensensitives Bauelement, insbesondere ein Schwingquarz oder ein Oberflächenwellenfilter. Der Transducer besitzt eine Oberfläche aus Edelmetall, vorzugsweise aus Gold. Die Edelmetalloberfläche weist eine Beschichtung aus einer kovalent über Metall-Schwefel-Bindungen gebundenen monomolekularen oder wenige Moleküllagen starken Self-Assembly-Schicht auf, welche funktionelle Endgruppen besitzt und als Haftvermittlerschicht dient. Der Beschichtung liegen ω-funktionelle Alkanthiole oder -disulfide zugrunde, die funktionellen Gruppen sind vorzugsweise Amino-, Hydroxyl-, Carboxyl-; Aldehyd-, Epoxid-, Isocyanat- oder Isothiocyanatgruppen.

An die Haftvermittlerschicht sind - als Erkennungssystem - Oligomere oder Polymere angekoppelt, wobei zur Ankopplung funktionelle Gruppen, vorzugsweise Amino-, Imino-, Hydroxyl-, Carboxyl-, Carbonsäureanhydrid-, Carbonsäureamid-, Aldehyd-, Epoxid-, Isocyanat-, Isothiocyanat-, Phosphorsäure-, Phosphonsäure- oder Sulfonsäuregruppen, dienen. Die Ankopplung kann direkt erfolgen oder unter Verwendung bifunktioneller Verbindungen, wie Glutardialdehyd und Hexamethylendiisocyanat. Die Erkennungsgruppen des Erkennungssystems sind vorzugsweise Amino-, Imino-, Hydroxyl-, Carboxyl-, Phosphorsäure-, Phosphonsäure-, Sulfonsäure-, Alkyl- und Arylgruppen sowie cyclische Gruppen und Käfigverbindungen.

Eine vorteilhafte Ausgestaltung der Erfindung besteht darin, an die Oligomer- bzw. Polymermatrix weitere Erkennungszentren anzukoppeln. Auf diese Weise läßt sich die Spezifität und die Empfindlichkeit des Erkennungssystems - unter Beibehaltung dieser Matrix - in weiten Grenzen variieren. Zur Ankopplung der weiteren Erkennungszentren dienen vorteilhaft Carbonsäureanhydrid-, Aldehyd-, Epoxid-, Isocyanat- und Isothiocyanatgruppen. Die Erkennungszentren weisen Erkennungsgruppen der vorstehend genannten Art auf.

Beim Chemosensor nach der Erfindung kann die Steuerung der Selektivität und des Meßbereiches über folgende Parameter erfolgen:

- Art und Konzentration der Erkennungsgruppen bzw. -zentren
- Molmasse bzw. Molmassenverteilung der eingesetzten Oligomere und Polymere
- Aufbau und gegebenenfalls Vernetzungsdichte der Oligomer- bzw. Polymermatrix
- Reaktionsbedingungen bei der Ankopplung der Oligomere bzw. Polymere an die Haftvermittlerschicht.

Zur Herstellung des Chemosensors nach der Erfindung wird auf den Edelmetallelektroden des massensensitiven Transducers zunächst eine monomolekulare oder wenige Moleküllagen starke Self-Assembly-Haftvermittlerschicht aufgebaut. Dies geschieht mittels ω-funktioneller Alkanthiole oder ω-funktioneller Alkandisulfide, deren Kettenlänge vorzugsweise $2 \leq n \leq 25$ beträgt; n bedeutet dabei die Anzahl der kettenständigen Kohlenstoffatome. Die ω-funktionellen Gruppen sind vorzugsweise Amino-, Hydroxyl-, Carboxyl-, Aldehyd-, Epoxid-, Isocyanat- und Isothiocyanatgruppen.

An diese Haftvermittlerschicht werden - in einem zweiten Schritt - oligomere oder polymere Systeme angekoppelt. Grundsätzlich können hierbei gemischt-funktionelle Systeme eingesetzt werden, d.h. Systeme mit einer größeren Anzahl an Erkennungsgruppen, wie Alkylgruppen, und einer kleineren Anzahl an Kopplungsgruppen, wie Aminogruppen, zur Anbindung an die Haftvermittlerschicht bzw. Transduceroberfläche; die beiden Arten von Gruppen unterscheiden sich dabei hinsichtlich der chemischen Funktionalität oder zumindest hinsichtlich der Reaktivität. Es ist prinzipiell aber auch möglich, polyfunktionelle Oligomere bzw. Polymere mit nur einer Art von funktionellen Gruppen zu verwenden, wobei beide Aufgaben, d.h. Ankopplung und Erkennung, durch diesen einen Funktionstyp erfüllt werden. Oligomersysteme können ferner direkt auf der Haftvermittlerschicht aufgebaut werden, beispielsweise durch sukzessive Polyaddition.

Für den Aufbau von Erkennungssystemen kommen insbesondere folgende Polymere in Frage:

a) Für saure Analyten, wie Ameisensäure, Essigsäure, Chlorwasserstoff, Kohlendioxid, Schwefeldioxid und Stickoxide:

- Polyethylenimin
- Polyvinylamin
- epichlorhydrinmodifiziertes Polyethylenimin, das mit einem niedermolekularen Polyamin funktionalisiert ist.

b) Für basische Analyten, wie Ammoniak und Amine:

- (Meth)acrylsäure-Copolymere
- Styrolsulfonsäure-Copolymere
- Maleinsäureanhydrid-Copolymere, bei denen die nicht zur Ankopplung an das Haftvermittlersystem dienenden Anhydridgruppen in Carbonsäuregruppen umgewandelt werden
- Polyphosphorsäure
- Polyvinylphosphonsäure und deren Copolymere.

c) Für Lösemittel:

- Polyvinylpyrrolidon
- hydroxyfunktionelles Polybutadien.

Vor allem für die Erkennung von Lösemittelmolekülen können auch spezielle Käfigverbindungen eingesetzt werden. Beispielhaft sei hierfür ein aus N,N'-disubstituiertem 1,2-Diaminoethan und Terephthalsäure aufgebautes Hexalactam genannt; diese Verbindung kann Chloroform als Gastmolekül komplexieren (siehe dazu: "Journal of the Chemical Society, Chemical Communications", 1982, Seiten 1398 bis 1400, und "Helvetica Chimica Acta", Vol. 68 (1985), Seiten 940 bis 944). Für den kovalenten Einbau in eine Matrix muß die Verbindung mit einem flexiblen Spacer mit einer Kopplunsgruppe, beispielsweise eine Carboxylgruppe, modifiziert werden.

Anhand von Ausführungsbeispielen soll die Erfindung noch näher erläutert werden.

Beispiel 1

Funktionelle Self-Assembly-Schichten auf Schwingquarzen als massensensitive Transducersysteme (Vergleichsversuche)

Auf den Goldelektroden von Schwingquarzen (Grundfrequenz: 10 MHz) werden folgende Disulfide kovalent immobilisiert:

(a) $H_2N-(CH_2)_{11}-S-S-(CH_2)_{11}-NH_2$      Bis-($\omega$-aminoundecanoyl)-disulfid
(b) $HOOC-(CH_2)_{10}-S-S-(CH_2)_{10}-COOH$      Bis-($\omega$-undecanoylsäure)-disulfid
(c) $H_3C-(CH_2)_{11}-S-S-(CH_2)_{11}-CH_3$      Bis-(dodecanoyl)disulfid
(d) $H_2N-(CH_2)_2-S-S-(CH_2)_2-NH_2$      Bis-(2-aminoethyl)disulfid (Cystamin)

Hierzu werden die Schwingquarze in Ethanol gereinigt und dann in eine ca. $10^{-3}$ molare Losung des entsprechenden Disulfids in Ethanol - bei (b), (c) und (d) - bzw. in einem Gemisch aus Ethanol und n-Heptan (Volumenverhältnis 2:3) - bei (a) - getaucht. Die Beschichtung erfolgt bei Raumtemperatur auf einem Schütteltisch (60 U/min) über einen Zeitraum von 72 h. Anschließend wird mit dem entsprechenden Lösungsmittel (Ethanol bzw. Ethanol/n-Heptan) gründlich gewaschen.

Die dabei erhaltenen Self-Assembly-Sulfidschichten werden über die Frequenzänderung ($\Delta$f) der Schwingquarze charakterisiert. Die Schichtdicke ergibt sich - bei den verwendeten Schwingquarzen - in vereinfachter Form nach: $d = 40 \text{ nm} \cdot \text{kHz}^{-1} \cdot \Delta f$ (siehe dazu: "Zeitschrift für Physik", Bd. 155 (1959), Seiten 206 bis 222); d ist dabei die Gesamtdicke, für beidseitig beschichtete Schwingquarze beträgt die Einzelschichtdicke die Hälfte des errechneten Wertes.

Unter gleichen Bedingungen beschichtete Referenzproben auf Basis von mit Gold besputterten Quarzplättchen werden ellipsometrisch untersucht ($\lambda$ = 632,8 nm), wobei zwischen Goldschicht und Quarzoberfläche - zur besseren Haftung - zusätzlich eine Titan-Zwischenschicht aufgesputtert ist. Die Beschichtungsergebnisse sind in Tabelle 1 zusammengefaßt.

Tabelle 1

| Self-Assembly-Schicht | Frequenzänderung | Schichtdicke (berechnet aus der Frequenzänderung) | Schichtdicke (ellipsometrisch bestimmt) |
|---|---|---|---|
| (a) | 47-136 Hz | 1-3 nm | 2 nm |
| (b) | 53 Hz | 1 nm | keine Messung |
| (c) | 143 Hz | 3 nm | keine Messung |
| (d) | 99 Hz | 2 nm | 2 nm |

Somit sind die entsprechend beschichteten Schwingquarze bei (a) und (d) säuresensitiv eingestellt, bei (b) basensensitiv und bei (c) sensitiv für unpolare Lösemittel.

Beispiel 2

Säuresensitive Erkennungsschichten auf der Basis von aminogruppenhaltigen Polymeren

Zum Aufbau säuresensitiver Erkennungsschichten werden folgende aminogruppenhaltige Polymere eingesetzt:

(e) Polyethylenimin, d.h. PEI ($M_n \sim$ 10000 g/mol)
(f) mit Epichlorhydrin modifiziertes PEI ($M_n \sim$ 20000 g/mol), das - nach der Ankopplung an das Haftvermittlersystem - mit N,N'-Bis-(3-aminopropyl)-ethylendiamin umgesetzt wurde
(g) Polyvinylamin ($M_n$ = 5000 bis 30000 g/mol).

Zur Immobilisierung der Polymere werden Schwingquarze, die entsprechend Beispiel 1 mit Bis-($\omega$-aminoundecanoyl)-disulfid (a) beschichtet wurden, durch Umsetzung mit Glutardialdehyd aldehydfunktionell eingestellt. Dies erfolgt durch zweistündige Behandlung der sulfidbeschichteten Schwingquarze mit einer 5%igen wäßrigen Lösung von Glutardialdehyd bei Raumtemperatur auf einem Schütteltisch (60 U/min), wobei anschließend mit Wasser gründlich gewaschen wird. Zur Aufbringung der Polymere werden die Schwingquarze - bei (e) und (f) - in eine 10%ige und - bei (g) - in eine 1 bzw. 4%ige wäßrige Lösung der Polymere getaucht. Die Dauer der Behandlung beträgt für (e) und (f) 24 h, für (g) 48 h, jeweils bei Raumtemperatur auf dem Schütteltisch (60 U/min). Nachfolgend wird wiederum gründlich mit Wasser gewaschen.

Die auf diese Weise erhaltenen Erkennungsschichten werden über die Frequenzänderung der Schwingquarze charakterisiert; die Schichtdickenberechnung erfolgt wie in Beispiel 1. Die Beschichtungsergebnisse sind in Tabelle 2 zusammengefaßt.

Tabelle 2

| Beschichtung (Polymer) | Konzentration der Polymerlösung | Frequenzänderung (nach Beschichtung) | Schichtdicke (berechnet) |
|---|---|---|---|
| (e) | 10 % | 409 Hz | 8 nm |
| (f) | 10 % | 547 Hz | 11 nm |
| (g) | 1 % | 147 Hz | 3 nm |
| (g) | 4 % | 2894 Hz | 58 nm |

Beispiel 3

Basensensitive Erkennungsschichten auf der Basis von anhydridgruppenhaltigen Polymeren

Zum Aufbau basensensitiver Erkennungsschichten werden folgende Maleinsäureanhydrid-Copolymere eingesetzt:

(h) Neopentylpropen-Maleinsäureanhydrid-Copolymer (1:1)
(i) Icosen-Maleinsäureanhydrid-Copolymer (1:1).

Zur Immobilisierung der Copolymere werden Schwingquarze, die entsprechend Beispiel 1 mit Bis-($\omega$-aminoundecanoyl)-disulfid (a) beschichtet wurden, bei Raumtemperatur 48 h auf einem Schütteltisch (60 U/min) mit einer 1 bzw. 2%igen Lösung des Copolymers in Tetrahydrofuran behandelt; anschließend wird mit Tetrahydrofuran gründlich gewaschen. Nach der Polymerbeschichtung werden nicht umgesetzte Anhydridgruppen mit einer Pufferlösung (pH 8) hydrolysiert, und dann werden die dabei gebildeten Carboxylatgruppen mit einer Pufferlösung (pH 5) protoniert.

Die auf diese Weise erhaltenen Erkennungsschichten werden über die Frequenzänderung der Schwingquarze charakterisiert; die Schichtdickenberechnung erfolgt wie in Beispiel 1. Die Beschichtungsergebnisse sind in Tabelle 3 zusammengefaßt.

Tabelle 3

| Beschichtung (Polymer) | Konzentration der Polymerlösung | Frequenzänderung (nach Beschichtung und Behandlung mit Pufferlösung pH 8) | Schichtdicke (berechnet) |
|---|---|---|---|
| (h) | 1 % | 25 Hz | 0,5 nm |
| (i) | 1 % | 45 Hz | 0,9 nm |
| (i) | 2 % | 72 Hz | 1,4 nm |

Beispiel 4

Lösemittelsensitive Erkennungsschichten auf der Basis von Polyvinylpyrrolidon

Zum Aufbau von für Lösemittel sensitiven Erkennungsschichten wird ein Polyvinylpyrrolidon (j) mit einer Molmasse von $M_n \sim 40000$ g/mol eingesetzt. Zur Immobilisierung des Polymers werden Schwingquarze, die entsprechend Beispiel 1 mit Bis($\omega$-aminoundecanoyl)-disulfid (a) beschichtet wurden, bei Raumtemperatur 24 h auf einem Schütteltisch (60 U/min) mit einer 10%igen wäßrigen Lösung des Polymers behandelt; anschließend wird mit Wasser gründlich gewaschen.

Die auf diese Weise erhaltenen Erkennungsschichten werden über die Frequenzänderung der Schwingquarze charakterisiert; die Schichtdickenberechnung erfolgt wie in Beispiel 1. Die ermittelte Frequenzabnahme beträgt 2903 Hz, was einer Schichtdicke von 58 nm entspricht.

Beispiel 5

Säuresensitive Multilayer-Erkennungsschichten auf der Basis von 1,8-Diaminooctan

Zum Aufbau säuresensitiver Multilayer-Erkennungsschichten werden Schwingquarze, die entsprechend Beispiel 1 mit Bis-($\omega$-aminoundecanoyl)-disulfid (a) beschichtet wurden, in eine 5%ige wäßrige Losung von Glutardialdehyd getaucht, wie in Beispiel 2 beschrieben. Zur Erzeugung der nächsten Schicht werden die Schwingquarze 4 h in eine 3%ige Lösung von 1,8-Diaminooctan in Ethanol getaucht; dies erfolgt bei Raumtemperatur auf einem Schütteltisch (60 U/min). Als nächste Schicht wird wieder Glutardialdehyd, wie in Beispiel 2 beschrieben, aufgebracht, dann folgt eine weitere Beschichtung mit 1,8-Diaminooctan, wie vorstehend angegeben. Die nächste Schicht besteht wieder aus Glutardialdehyd. Nach jeder Umsetzung wird mit dem entsprechenden Lösungsmittel (Wasser bzw. Ethanol) gründlich gewaschen. Der Beschichtungsvorgang wird so oft wiederholt, bis vier Lagen von 1,8-Diaminooctan vorliegen. Die letzte Schicht besteht aus 1,8-Diaminooctan, die Oberfläche der Erkennungsschicht ist damit aminofunktionalisiert.

Die auf diese Weise erhaltenen Erkennungsschichten (Multilayer 1) werden über die Frequenzänderung der Schwingquarze charakterisiert; die Schichtdickenberechnung erfolgt wie in Beispiel 1. Die Beschichtungsergebnisse sind in Tabelle 4 zusammengefaßt.

Tabelle 4

| Frequenzänderung nach 1. Beschichtungszyklus | Schichtdicke (berechnet) | Frequenzänderung nach 4. Beschichtungszyklus | Schichtdicke (berechnet) |
|---|---|---|---|
| 123 Hz | 3 nm | 871 Hz | 17 nm |

Beispiel 6

Lösemittelsensitive Multilayer-Erkennungsschichten auf der Basis von 1,8-Diaminooctan

Zum Aufbau von für Lösemittel sensitiven Multilayer-Erkennungsschichten werden Schwingquarze, die entsprechend Beispiel 1 mit Bis-($\omega$-aminoundecanoyl)-disulfid (a) beschichtet wurden, in eine 5%ige wäßrige Losung von Glutardialdehyd getaucht, wie in Beispiel 2 beschrieben. Zur Erzeugung der nächsten Schicht werden die Schwingquarze 4 h in eine 3%ige Lösung von 1,8-Diaminooctan in Ethanol getaucht; dies erfolgt bei Raumtemperatur auf einem Schütteltisch (60 U/min). Als nächste Schicht wird wieder Glutardialdehyd, wie in Beispiel 2 beschrieben, aufgebracht, dann folgt eine weitere Beschichtung mit 1,8-Diaminooctan, wie vorstehend angegeben. Die nächste Schicht besteht wieder aus Glutardialdehyd. Dieser Beschichtungsvorgang wird so oft wiederholt, bis vier Lagen von 1,8-Diaminooctan vorliegen, wobei die letzte Schicht aus 1,8-Diaminooctan besteht. Zur Absättigung der endständigen Aminogruppen wird diese Schicht mit n-Octanal zur Reaktion gebracht. Dazu werden die Schwingquarze bei Raumtemperatur 4 h auf einem Schütteltisch (60 U/min) in eine 3%ige ethanolische Lösung von n-Octanal getaucht. Die Oberfläche der Erkennungsschichten ist dann alkylfunktionalisiert. Nach jeder Umsetzung wird im übrigen mit dem entsprechenden Lösungsmittel (Wasser bzw. Ethanol) gründlich gewaschen.

Die auf diese Weise erhaltenen Erkennungsschichten (Multilayer 2) werden über die Frequenzänderung der Schwingquarze charakterisiert; die Schichtdickenberechnung erfolgt wie in Beispiel 1. Die ermittelte Frequenzabnahme nach der Behandlung mit n-Octanal beträgt 82 Hz, was - im Vergleich zur Multilayer-Erkennungsschicht nach Beispiel 5 - einer Schichtdickenzunahme von 2 nm entspricht.

Beispiel 7

Ansprechverhalten säuresensitiver Erkennungsschichten

Zur Ermittlung der Empfindlichkeit von säuresensitiven Erkennungsschichten auf Schwingquarzen wird in folgender Weise vorgegangen. Ein trockener Stickstoffstrom wird zur Sättigung mit Säuredampf durch ein mit Essigsäure gefülltes thermostatisiertes Gefäß geleitet und - je nach dem gewünschten Säuregehalt - mit weiterem Stickstoff verdünnt. Dieses Prüfgas bekannter Zusammensetzung wird dann durch eine thermostatisierte Meßzelle geleitet, welche jeweils neben einem beschichteten Schwingquarz einen unbeschichteten Referenzquarz enthält. Die Änderung der Frequenz bei Begasung wird über einen Frequenzzähler detektiert, die numerische Auswertung erfolgt mit einem PC. Die Ergebnisse der Messungen sind in Tabelle 5 zusammengefaßt.

Mit Bis-($\omega$-aminoundecanoyl)-disulfid (a) beschichtete Schwingquarze nach Beispiel 1 zeigen - wegen der geringen Anzahl an Erkennungsgruppen - bei Begasen mit 100 bis 250 ppm Essigsäure keine Frequenzerniedrigung im Vergleich zum unbeschichteten Quarz.

Mit Polyethylenimin (e) beschichtete Schwingquarze nach Beispiel 2 zeigen gegenüber Essigsäure im Bereich von 100 bis 250 ppm eine Empfindlichkeit in der Größenordnung von 60 bis 150 Hz pro 100 ppm.

Mit Epichlorhydrin modifizierte Polyethylenimin-Schichten (f) nach Beispiel 2 zeigen im Bereich von 100 bis 250 ppm Essigsäure eine Empfindlichkeit von 100 bis 250 Hz pro 100 ppm.

Mit Polyvinylamin (g) beschichtete Schwingquarze nach Beispiel 2 zeigen - je nach Schichtdicke der Polyvinylamin-Erkennungsschicht - eine unterschiedliche Empfindlichkeit.

Multilayer-Erkennungsschichten nach Beispiel 5 zeigen beim Begasen im Bereich von 100 bis 5000 ppm Essigsäurekonzentration eine Empfindlichkeit von 30 bis 34 Hz pro 100 ppm. Nach Absättigung der endständigen Aminogruppen durch Octanal (siehe Beispiel 6) wird die Säureempfindlichkeit auf 10 bis 30 Hz pro 100 ppm reduziert.

Tabelle 5

| Beschichtung | Schichtdicke (berechnet) | Empfindlichkeit (pro 100 ppm) | Meßbereich |
|---|---|---|---|
| (a) | | 0 Hz | 100-250 ppm |
| (e) | 8 nm | 60-150 Hz | 100-250 ppm |
| (f) | 11 nm | 100-250 Hz | 100-250 ppm |
| (g) | 3 nm | 20-40 Hz | 100-500 ppm |
| (g) | 58 nm | 50-100 Hz | 100-500 ppm |
| Multilayer 1 | | 30-34 Hz | 100-5000 ppm |
| Multilayer 2 | | 10-30 Hz | 100-5000 ppm |

Beispiel 8

Ansprechverhalten basensensitiver Erkennungsschichten

Zur Ermittlung der Empfindlichkeit von basensensitiven Erkennungsschichten auf Schwingquarzen wird in folgender Weise vorgegangen. Ein trockener Stickstoffstrom wird zur Sättigung mit Ammoniakdampf durch ein mit einer 25%igen Anmoniaklösung gefülltes thermostatisiertes Gefäß geleitet und - je nach dem gewünschten Ammoniakgehalt - mit weiterem Stickstoff verdünnt. Dieses Prüfgas bekannter Zusammensetzung wird dann durch eine thermostatisierte Meßzelle geleitet, welche jeweils neben einem beschichteten Schwingquarz einen unbeschichteten Referenzquarz enthält. Die Änderung der Frequenz bei Begasung wird über einen Frequenzzähler detektiert, die numerische Auswertung erfolgt mit einem PC. Die Ergebnisse der Messungen sind in Tabelle 6 zusammengefaßt.

Mit Bis-($\omega$-undecanoylsäure)-disulfid (b) beschichtete Schwingquarze nach Beispiel 1 weisen eine carboxylfunktionalisierte Oberfläche auf. Diese Oberfläche zeigt - wegen der geringen Anzahl an Erkennungsgruppen - bei Begasen mit Ammoniak keine Frequenzänderung.

Bei den Copolymeren (h) und (i) nach Beispiel 3 ergibt sich bei der Einwirkung von Ammoniakdampf eine Frequenzerniedrigung von 0,4 bis 1 Hz pro 1000 ppm, abhängig von der Konzentration der Beschichtungslösung.

Tabelle 6

| Beschichtung | Schichtdicke *) (berechnet) | Empfindlichkeit (pro 1000 ppm) | Meßbereich (gemessen) |
|---|---|---|---|
| (b) | | 0 Hz | 0,1-1 % |
| (h) | 0,5 nm | 0,4 Hz | 0,1-10 % |
| (i) | 0,9 mm | 0,6 Hz | 0,1-10 % |
| (i) | 1,4 nm | 1 Hz | 0,1-10 % |

*) nach Behandlung mit Pufferlösung pH 5 (siehe Beispiel 3)

Beispiel 9

Ansprechverhalten lösemittelsensitiver Erkennungsschichten

Zur Ermittlung der Empfindlichkeit von lösemittelsensitiven Erkennungsschichten auf Schwingquarzen wird in folgender Weise vorgegangen. Ein trockener Stickstoffstrom wird zur Sättigung mit Lösemitteldampf durch ein mit Toluol gefülltes thermostatisiertes Gefäß geleitet und - je nach dem gewünschten Lösemittelgehalt - mit weiterem Stickstoff verdünnt. Dieses Prüfgas bekannter Zusammensetzung wird dann durch eine thermostatisierte Meßzelle geleitet, welche jeweils neben einem beschichteten Schwingquarz einen unbeschichteten Referenzquarz enthält. Die Änderung der Frequenz bei Begasung wird über einen Frequenzzähler detektiert, die numerische Auswertung erfolgt mit einem PC. Die Ergebnisse der Messungen sind in Tabelle 7 zusammengefaßt.

Beim Vermessen von mit Bis-(dodecanoyl)-disulfid (c) beschichteten Schwingquarzen nach Beispiel 1 konnte bei der Einwirkung von Toluol keine Frequenzänderung detektiert werden.

Mit Polyvinylpyrrolidon (j) beschichtete Schwingquarze nach Beispiel 4 zeigen gegenüber Toluol im Bereich von 50 bis 500 ppm eine Empfindlichkeit von 20 Hz pro 100 ppm.

Alkylfunktionalisierte Multilayer-Erkennungsschichten nach Beispiel 6 ergeben bei Begasen mit Toluoldampf eine Frequenzerniedrigung von 8 Hz pro 100 ppm.

Tabelle 7

| Beschichtung | Empfindlichkeit (pro 100 ppm) | Meßbereich |
|---|---|---|
| (c) | 0 Hz | 50-250 ppm |
| (j) | 20 Hz | 50-500 ppm |
| Multilayer 2 | 8 Hz | 50-500 ppm |

**Patentansprüche**

1. Chemosensor mit einem Transducersystem und einem Erkennungssystem, **dadurch gekennzeichnet,**

   - daß das Transducersystem ein massensensitives Bauelement ist, wobei die Transduceroberfläche Edelmetallelektroden aufweist,
   - daß die Edelmetallelektroden mit einer monomolekularen oder wenige Moleküllagen dicken Self-Assembly-Schicht versehen sind, die über Schwefelbrücken kovalent an das Edelmetall gebunden ist und funktionelle Gruppen besitzt,
   - und daß an die funktionellen Gruppen ein Erkennungssystem in Form einer Oligomer- oder Polymermatrix gebunden ist, welche Erkennungsgruppen besitzt.

2. Chemosensor nach Anspruch 1, **dadurch gekennzeichnet,** daß die Self-Assembly-Schicht aus funktionelle Gruppen aufweisenden ω-Alkanthiolen oder ω-Alkandisulfiden aufgebaut ist.

3. Chemosensor nach Anspruch 1 oder 2, **dadurch gekennzeichnet,** daß die funktionellen Gruppen Amino-, Hydroxyl-, Carboxyl-, Aldehyd-, Epoxid-, Isocyanat- oder Isothiocyanatgruppen sind.

4. Chemosensor nach einem der Ansprüche 1 bis 3, **dadurch gekennzeichnet,** daß die Erkennungsgruppen Amino- , Imino-, Hydroxyl-, Carboxyl-, Phosphorsäure-, Phosphonsäure-, Sulfonsäure-, Alkyl- oder Arylgruppen, cyclische Gruppen oder Käfigverbindungen sind.

5. Chemosensor nach einem oder mehreren der Ansprüche 1 bis 4, **dadurch gekennzeichnet,** daß an die Oligomer- bzw. Polymermatrix weitere Erkennungszentren angekoppelt sind.

6. Verfahren zur Herstellung eines Chemosensors nach einem oder mehreren der Ansprüche 1 bis 5, **dadurch gekennzeichnet,** daß an die Oberfläche der Edelmetallelektroden ein - funktionelle Gruppen aufweisendes - $\omega$- funktionelles Alkanthiol oder Alkandisulfid, vorzugsweise mit einer Kettenlänge $2 \leq n \leq 25$, gebunden wird, und daß an die funktionellen Gruppen ein polyfunktionelles Oligomer oder Polymer angekoppelt wird.

7. Verfahren nach Anspruch 6, **dadurch gekennzeichnet,** daß das Oligomer bzw. Polymer mittels Amino-, Imino-, Hydroxyl-, Carboxyl-, Carbonsäureanhydrid-, Carbonsäureamid-, Aldehyd-, Epoxid-, Isocyanat-, Isothiocyanat-, Phosphorsäure-, Phosphonsäure- oder Sulfonsäuregruppen direkt oder über eine bifunktionelle Verbindung angekoppelt wird.

8. Verfahren nach Anspruch 6 oder 7, **dadurch gekennzeichnet,** daß an die funktionellen Gruppen Polyethylenimin, Polyvinylamin oder ein mit Epichlorhydrin modifiziertes Polyethylenimin angelagert wird, wobei das modifizierte Polyethylenimin - nach der Anlagerung - mit einem niedermolekularen Polyamin funktionalisiert wird.

9. Verfahren nach Anspruch 6 oder 7, **dadurch gekennzeichnet,** daß an die funktionellen Gruppen ein (Meth)acrylsäure-Copolymer, ein Styrolsulfonsäure-Copolymer, ein Maleinsäureanhydrid-Copolymer, Polyphosphorsäure oder Polyvinylphosphonsäure angelagert wird, wobei beim Maleinsäureanhydrid-Copolymer nach der Anlagerung vorhandene Anhydridgruppen hydrolysiert werden.

10. Verfahren nach Anspruch 6 oder 7, **dadurch gekennzeichnet,** daß an die funktionellen Gruppen Polyvinylpyrrolidon oder ein hydroxyfunktionelles Polybutadien angelagert wird.

**Europäisches Patentamt**

# EUROPÄISCHER RECHERCHENBERICHT

Nummer der Anmeldung

EP 95 11 3310

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-5 076 094 (FRYE GREGORY C ET AL) 31.Dezember 1991 * Anspruch 16 * | 1 | G01N29/02 |
| A | PATENT ABSTRACTS OF JAPAN vol. 018 no. 384 (P-1772) ,19.Juli 1994 & JP-A-06 109710 (MARUYASU KOGYO KK) 22.April 1994, * Zusammenfassung * | 1 | |
| A | EP-A-0 361 729 (HEWLETT PACKARD CO) 4.April 1990 * das ganze Dokument * | 1 | |

RECHERCHIERTE SACHGEBIETE (Int.Cl.6)

G01N

Der vorliegende Recherchenbericht wurde für alle Patentansprüche erstellt

| Recherchenort | Abschlußdatum der Recherche | Prüfer |
|---|---|---|
| DEN HAAG | 13.Oktober 1995 | Kouzelis, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P04C03)